# EUROPEAN PATENT APPLICATION

(11) **EP 4 640 565 A1**
(43) Date of publication of application: **29.10.2025**
(21) Application number: 25171899.5
(22) Date of filing: 23.04.2025
(51) Int. Cl.: B64D 37/30, B64D 37/34

(54) **HIGH-PRESSURE HYDROGEN DISTRIBUTION SYSTEM FOR AN AIRCRAFT WITH A TANK STORING SUPERCRITICAL HYDROGEN**

(30) Priority: 26.04.2024 US 202463639411 P
(71) Applicant: Airbus (S.A.S.), 31700 Blagnac (FR); Airbus Operations (S.A.S.), 31060 Toulouse Cedex 9 (FR)
(72) Inventor: LANDOLT, Jonathan, 31700 BLAGNAC (FR); RAVENEAU, Guillaume, 31060 TOULOUSE (FR)
(74) Representative: Cabinet Le Guen Maillet

(57) **Abstract**

A system for supplying hydrogen to hydrogen consumer on an aircraft with a tank storing supercritical hydrogen. Energy is added to the tank to ensure tank pressure maintains supercritical. A pump may be included.

## Description

### FIELD OF THE INVENTION

The invention relates to a hydrogen distribution system for an aircraft in order to distribute hydrogen from a tank to a hydrogen consumer in the aircraft, and an aircraft comprising such hydrogen distribution system.

### BACKGROUND OF THE INVENTION

It has been suggested that aircraft may utilize hydrogen for powering gas turbine engines or for use in fuel cells providing electricity to electrical motors driving a propeller of the aircraft. Hydrogen (H2) is stored as liquid hydrogen (LH2) in a cryogenic tank at a temperature of approximately -253°C. Hydrogen used by the consumers is gaseous hydrogen (GH2) that is stored in a tank onboard the aircraft. The propulsion system needs to be fed with hydrogen at a sufficient pressure greater than predetermined pressure. As an example, for a turbopropeller, this predetermined pressure could be in the range from 30 to 50 bars.

Hydrogen used by the consumers is gaseous hydrogen (GH2) that is stored in a tank onboard the aircraft. The tank of hydrogen could be a tank containing Gaseous Hydrogen (GH2) or a tank containing Liquid Hydrogen (LH2). However, each of these has drawbacks.

High pressure gaseous tanks are heavy and/or are not capable of storing enough H2 by volume unit (H2 density). Additionally, liquid storage solutions need to operate at low pressures (critical pressure limitation), therefore pumps/compressor are be to match high pressure interface requirements such as for turbopropeller or high pressure fuel cell.

Pumps/compressors are associated with risks, limitations and wide architecture impact that it would be desirable to avoid, including:
Pump complexity and development technical risks associated therewith;
Pump maintenance impact on architecture;
Pump recirculation needs impact system complexity and potential H2 losses;
Net Positive Suction Pressure (NPSP) required at pump inlet impact strongly the complexity of the fuel system; and,
Mandatory chilldown in case of cryogenic pump (impact on operation time, H2 lost for the mission).

Liquid distribution is associated with technical risks and safety risks that it would be desirable to avoid, including:
Overpressure in the vicinity of the fuel system after a liquid leak when H2 temperature increases;
Overpressure in the fuel system in nominal /abnormal conditions due to heat ingress (especially when flow is stopped); and,
High insulation needs to keep the H2 in liquid form especially in Idle (low mass flow).

With a pump, respecting the NPSP required at the inlet of pump at all time is a complex matter especially during idle phase and quick transient.

In case of high-pressure distribution (no additional pressurization in engine side), distribution pipe technology is a complex matter as it has to stand with hard thermal requirement (cycle with length change) and high pressure loads.

Therefore, a system is needed to provide high-pressure hydrogen to a consumer on an aircraft.

### SUMMARY OF THE INVENTION

An object of the present invention is to provide a hydrogen distribution system to distribute hydrogen from a tank to a hydrogen consumer in an aircraft.

For this purpose, is proposed a hydrogen distribution system for supplying hydrogen to a hydrogen consumer on an aircraft, the hydrogen distribution system comprising:
- a tank storing hydrogen at a supercritical pressure;
- a supply pipe fluidly connected between the tank and the hydrogen consumer;
- a primary heat exchanger arranged on the supply pipe and configured to heat the hydrogen flowing in said supply pipe from the tank to the hydrogen consumer; and
- a tank heater arranged in the tank and configured to heat the hydrogen in the tank. Such system is simple and manage the pressure in the tank.

Advantageously, the hydrogen distribution system comprises a pump arranged on the supply pipe.

Advantageously, the hydrogen distribution system comprises a line pressure sensor arranged to measure the pressure of the hydrogen in the supply pipe and located downstream of the pump, and a control unit arranged to receive data from the line pressure sensor and to control the speed of the pump according to these data.

According to an embodiment of the invention, the tank heater is an electrical heater, and the hydrogen distribution system comprises a tank pressure sensor arranged to measure the pressure of the hydrogen in the tank and a control unit arranged to receive data from the tank pressure sensor and to control the tank heater according to these data.

Advantageously, the hydrogen distribution system comprises a line temperature sensor arranged downstream the primary heat exchanger, and a control unit arranged to receive data from the line temperature sensor and to control the primary heat exchanger according to these data.

According to another embodiment of the invention, the tank heater is a heat exchanger, and the supply pipe crosses firstly the tank heater and secondly the primary heat exchanger.

Advantageously, the hydrogen distribution system comprises a pre-warming heat exchanger arranged on the supply pipe and configured to heat the hydrogen flowing in said supply pipe, and said pre-warming heat exchanger is arranged upstream the tank heater.

Advantageously, the hydrogen comprises a tank pressure sensor arranged to measure the pressure of the hydrogen in the tank and a control unit arranged to receive data from the tank pressure sensor and to control the pre-warming heat exchanger according to these data.

Advantageously, the hydrogen distribution system comprises a line temperature sensor arranged downstream the primary heat exchanger, and a control unit arranged to receive data from the line temperature sensor and to control the primary heat exchanger according to these data.

According to another embodiment of the invention, the tank heater is a heat exchanger, and the hydrogen distribution system comprises a first sub-pipe fluidly connected by one end to a first connection point of the supply pipe downstream the primary heat exchanger and by another end to the tank heater, and a second sub-pipe fluidly connected by one end to the tank heater and by another end to a second connection point of the supply pipe downstream the first connection point.

Advantageously, the hydrogen distribution system comprises a variable three-way valve arranged at the first connection point, a tank pressure sensor arranged to measure the pressure of the hydrogen in the tank and a control unit arranged to receive data from the tank pressure sensor and to control the variable three-way valve according to these data.

Advantageously, the hydrogen distribution system comprises a secondary heat exchanger arranged on the second sub-pipe and configured to heat the hydrogen flowing in said second sub-pipe.

Advantageously, the hydrogen distribution system comprises a line temperature sensor arranged downstream the second connection point, and a control unit arranged to receive data from the line temperature sensor and to control the primary heat exchanger and/or the secondary heat exchanger when it's present, according to these data.

The invention proposes also an aircraft comprising a hydrogen consumer and a hydrogen distribution system according to any one of the preceding embodiments wherein the supply pipe is fluidly connected to the hydrogen consumer. Advantageously, the hydrogen consumer is a combustion engine with a combustion chamber fueled with hydrogen.

### BRIEF DESCRIPTION OF THE DRAWINGS

Embodiments of the invention are described in more detail with reference to the accompanying schematic drawings that are listed below
Fig. 1 is a schematic drawing of a hydrogen distribution system according to a first embodiment of the invention;
Fig. 2 is a schematic drawing of a control hydrogen distribution system according to a variant of the first embodiment of Fig. 1;
Fig. 3 is a schematic drawing of a hydrogen distribution system according to a second embodiment of the invention;
Fig. 4 is a schematic drawing of a control hydrogen distribution system according to a variant of the second embodiment of Fig. 3;
Fig. 5 is a schematic drawing of a hydrogen distribution system according to a third embodiment of the invention;
Fig. 6 is a schematic drawing of a control hydrogen distribution system according to a variant of the third embodiment of Fig. 5; and
Fig. 7 is a schematic drawing of an aircraft using a hydrogen distribution system according to the invention.

In the various Figures, the same reference numbers are used for the same features.

### DETAILED DESCRIPTION OF THE PREFERRED EMBODIMENTS

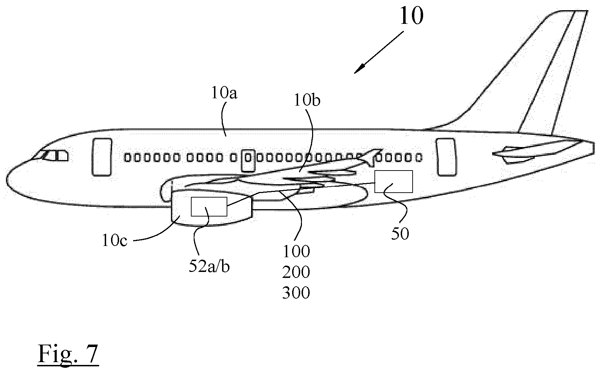

Fig. 7 depicts an aircraft 10 comprising a hydrogen consumer 52 and a hydrogen tank 50 containing hydrogen at supercritical conditions and the temperature inside the tank 50 is controlled in such a way to maintain a constant supercritical pressure inside the tank 50 all along the time hydrogen is sent from the tank 50 to the hydrogen consumer 52.

For hydrogen, the critical pressure is about 12,9 to 13 bars and for supercritical conditions, the pressure inside the tank 50 is above such value.

The hydrogen consumer 52 can be a combustion engine, for example a turbine engine, a turbopropeller, .... Alternatively, the hydrogen consumer 52 may be fuel cells producing electricity for powering electrical motors driving a propulsive fan (via a gear box).

An advantage of supercritical state is that the density is very high for low temperature (same order of magnitude as for the liquid). Extraction at constant pressure is possible if the temperature increases (density of the hydrogen in the tank 50 will decrease). The tank 50 is considered "full" at low temperature (density is high). The tank 50 is considered "empty" at high temperature (density is low). For extracting mass flow from the tank 50 at a constant pressure, energy has to be injected into the tank 50 in order to increase the temperature.

The aircraft 10 comprises also a hydrogen distribution system 100, 200, 300 according to the invention.

In the description, the terms "upstream" and "downstream" are related to the flow direction of the hydrogen in the pipe.

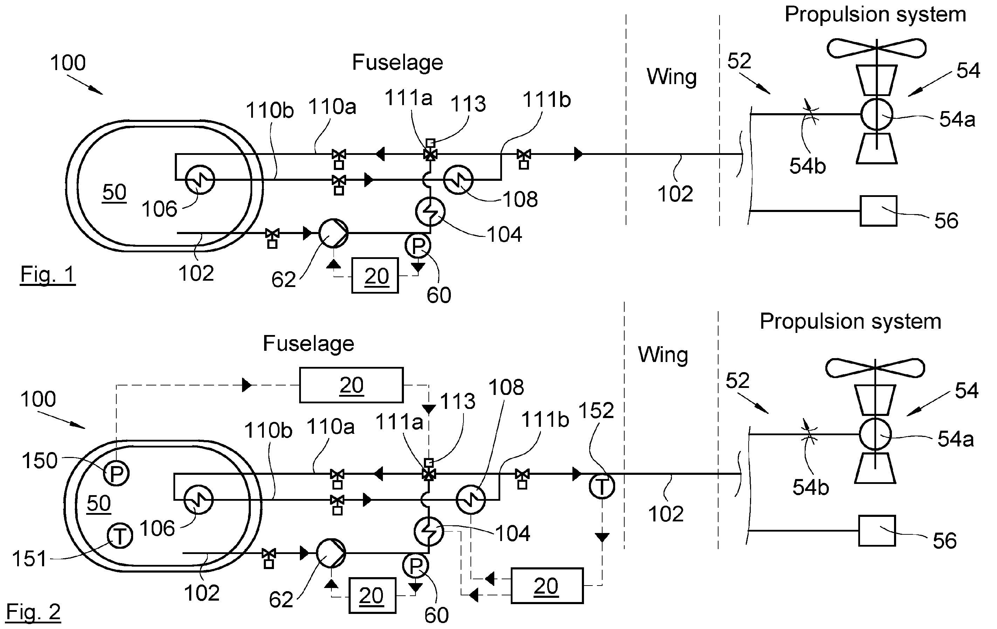

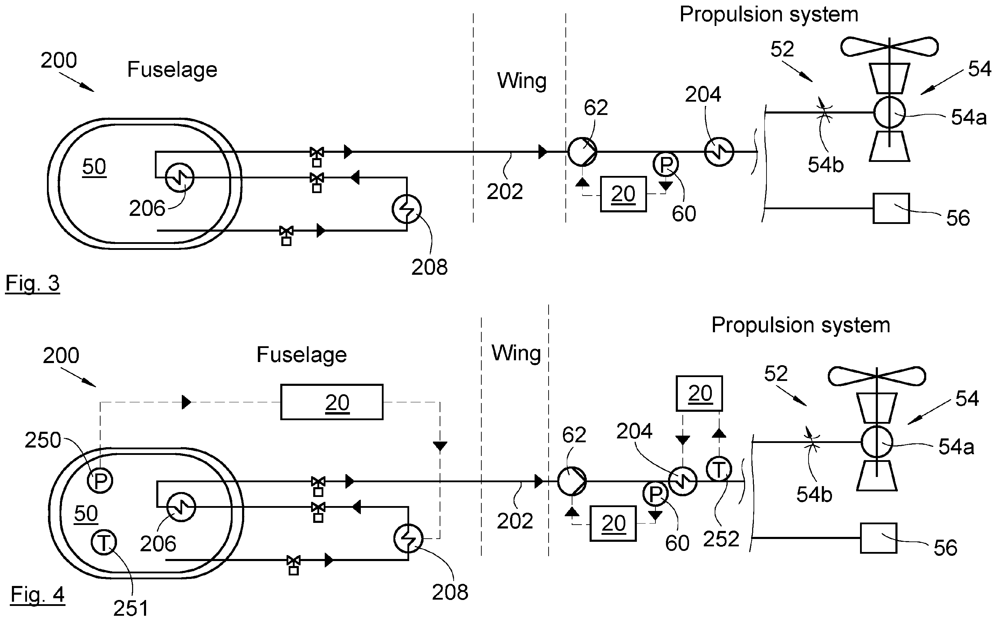

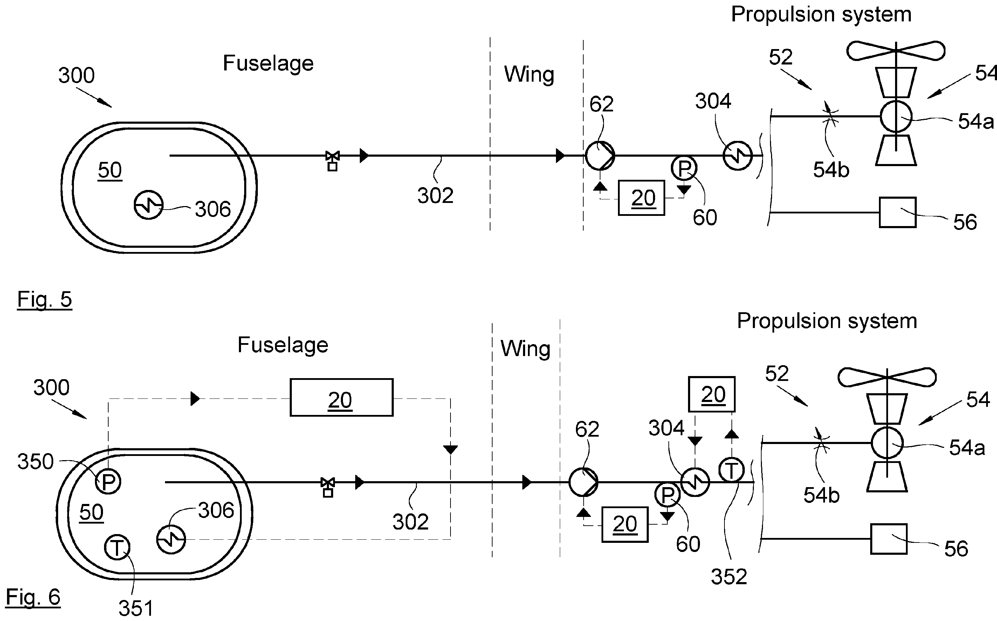

Figs. 1 and 2 depict a hydrogen distribution system 100 according to a first embodiment. Figs 3 and 4 depict a hydrogen distribution system 200 according to a second embodiment and Figs. 5 and 6 depict a hydrogen distribution system 300 according to a third embodiment.

The hydrogen consumer 52 may be a combustion engine 54, for example a turbopropeller with a combustion chamber fueled with hydrogen coming from the hydrogen distribution system 100, 200, 300. Alternatively, the hydrogen consumer 52 may be fuel cells 56 producing electricity for powering electrical motors driving a propulsive fan (via a gear box). In the present invention, the hydrogen consumer 52 may be any kind of hydrogen consumer. To control the amount of hydrogen entering in the combustion chamber 54a, a valve 54b is arranged on the supply line 102, 202, 302.

The hydrogen distribution system 100, 200, 300 includes a tank 50 storing liquid and gaseous hydrogen at supercritical state (P>Pcritical). The tank pressure is above a pressure required at the interface between the hydrogen distribution system 100, 200, 300 and the hydrogen consumer 52. The tank pressure is also sufficient to create the mass flow to the interface.

The hydrogen distribution system 100, 200, 300 includes also a supply pipe 102, 202, 302 fluidly connected between the tank 50 and the hydrogen consumer 52.

The hydrogen distribution system 100, 200, 300 includes also a primary heat exchanger 104, 204, 304 arranged on the supply pipe 102, 202, 302 and configured to heat gaseous hydrogen to a temperature required at the interface.

The hydrogen distribution system 100, 200, 300 includes also a tank heater 106, 206, 306 arranged in the tank 50 and configured to heat the hydrogen in the tank 50. The tank heater 106, 206, 306 provides energy to the tank 50 to maintain the tank pressure. Maintaining a high pressure in the tank 50, i.e. at a supercritical pressure, all along the extraction of hydrogen from the tank 50, allows hydrogen to be fed to the hydrogen consumer 52 with this high pressure minus pressure drops in the distribution system. Especially, when the hydrogen consumer 52 is a propulsive system.

In the first embodiment, hydrogen flows from the tank 50 in the supply pipe 102 to go through the primary heat exchanger 104 and after for a part to the hydrogen consumer 52 and for another part through the tank heater 106 to be reinjected in the supply pipe 102.

In the second embodiment, the hydrogen flows from the tank 50 in the supply pipe 202 to go through firstly the tank heater 206 and secondly the primary heat exchanger 204 and after to the hydrogen consumer 52.

In the third embodiment, the hydrogen flows from the tank 50 in the supply pipe 302 to go through firstly the primary heat exchanger 304 and after to the hydrogen consumer 52.

If the supercritical pressure in the tank 50 is chosen sufficiently high such that the pressure of hydrogen fed to the hydrogen consumer 52 is at least equal to the predetermined pressure required for the functioning of said hydrogen consumer 52, it is not mandatory to have a pump to distribute hydrogen to the hydrogen consumer 52. Thus, the hydrogen distribution system 100, 200, 300 only requires valves or passive elements.

If the supercritical pressure in the tank 50 is chosen lower than the predetermined pressure required for the functioning of the hydrogen consumer 52, a pump is added in series on the supply pipe 102, 202, 302 to bring supplementary pressure, such that the pressure of hydrogen fed to the hydrogen consumer 52 is greater or equal to the predetermined pressure required for the functioning of the hydrogen consumer 52.

According to this variant of the three embodiments, the hydrogen distribution system 100, 200, 300 comprises a pump 62 arranged on the supply pipe 102, 202, 302.

The high pressure architectures proposed above require high tank mass to support the high pressure. Adding the pump 62 working at supercritical pressure, decreases the supercritical storage pressure need and associated tank mass.

The tank 50 stores the hydrogen in supercritical state (P>Pcritical) but the tank pressure is under the interface requirement pressure (at least at some time during the use of the hydrogen distribution system 100, 200, 300). The pump 62 increases the pressure to match the interface pressure requirement. As the hydrogen at the pump inlet is supercritical, there is no risk of cavitation. NPSP required is no longer defined and relevant.

This has the advantage of reducing tank mass while keeping most of the advantages discussed above. Additionally, the pump 62 does not need a "NPSP required" as working with supercritical hydrogen at its inlet (there is no phase change possible). For a variant of the invention, the hydrogen distribution system 100, 200, 300 comprises a line pressure sensor 60 arranged on the supply pipe 102, 202, 302 to measure the pressure of the hydrogen in the supply pipe 102, 202, 302 and arranged downstream of the pump 62, and a control unit 20 arranged to receive data from the line pressure sensor 60 and to control the speed of the pump 62 according to these data.

More precisely, the control unit 20 has a memory in which are stocked a first target line pressure and a second target line pressure and it comprises means for comparing these target line pressures to the pressure measured and transmitted by the line pressure sensor 60.

According to a particular embodiment, the first target line pressure is egal to 35 bar and the second target line pressure is egal to 50 bar. In a general manner, the first target line pressure is below the second target line pressure, but they can be egal.

When the control unit 20 detects that the measured pressure is below the first target line pressure, the control unit 20 commands an increasing of the speed of the pump 62, and when the control unit 20 detects that the measured pressure is above the second target line pressure, the control unit 20 commands a decreasing of the speed of the pump 62.

According to another particular embodiment, the regulation is done through a PID with control loop feedback with a target pressure comprises between 35 bar and 50 bar.

According to a specific embodiment, the predetermined pressure required for the functioning of the hydrogen consumer 52, particularly a propulsive system, is chosen equal to a fixed value all along the flight of the aircraft 10, in particular the maximum value required during the flight, which corresponds to take-off.

For the three embodiments, the line pressure sensor 60 is installed just upstream the primary heat exchanger 104, 204, 304.

In the first embodiment, the tank heater 106 is a heat exchanger in which the calories of the hydrogen circulating in said tank heater 106 are transferred to the hydrogen stored in the tank 50 to heat it.

The hydrogen distribution system 100 comprises a first sub-pipe 110a fluidly connected by one end to a first connection point 111a of the supply pipe 102 downstream the primary heat exchanger 104 and by another end to an input port of the tank heater 106 and a second sub-pipe 110b fluidly connected by one end to an output port of the tank heater 106 and by another end to a second connection point 111b of the supply pipe 102 downstream the first connection point 111a.

A portion of the heated gaseous hydrogen is derived from the supply pipe 102 to the hydrogen consumer 52 to the tank heater 106 instead and the gaseous hydrogen from the tank heater 106 is combined with the main flow in the supply pipe 102 and passed to the hydrogen consumer 52.

To manage the portion of the hydrogen passing directly to the hydrogen consumer 52 or through the tank heater 106, a variable three-way valve 113 is arranged at the first connection point 111a. A first way is connected to the first sub-pipe 110a, a second way is connected to the supply pipe 102 coming from the primary heat exchanger 104 and a third way is connected to the supply pipe 102 going to the hydrogen consumer 52.

As represented on the variant of the first embodiment shown on the Fig. 2, the variable three-way valve 113 can be automatically controlled. For this purpose, the hydrogen distribution system 100 comprises a tank pressure sensor 150 arranged to measure the pressure of the hydrogen in the tank 50 and the control unit 20 arranged to receive data from the tank pressure sensor 250 and to control the variable three-way valve 113 according to these data.

As previously described, the control unit 20 has a memory in which are stocked a first target tank pressure and a second target tank pressure and it comprises means for comparing these target tank pressures to the pressure measured and transmitted by the tank pressure sensor 150.

According to a particular embodiment, the first target tank pressure is egal to 35 bar and the second target tank pressure is egal to 50 bar. In a general manner, the first target tank pressure is below the second target tank pressure, but they can be egal. When the control unit 20 detects that the measured pressure is under the first target tank pressure, the control unit 20 commands the variable three-way valve 113 in order to have an increasing of the percentage of the hydrogen injected into the tank heater 106, and when the control unit 20 detects that the measured pressure is above the second target tank pressure, the control unit 20 commands the variable three-way valve 113 in order to have a decreasing of the percentage of the hydrogen injected into the tank heater 106.

According to another particular embodiment, the regulation is done through a PID with control loop feedback with a target pressure comprises between 35 bar and 50 bar.

As an option, the hydrogen distribution system 100 comprises a secondary heat exchanger 108 arranged on the second sub-pipe 110b and configured to heat the hydrogen flowing in said second sub-pipe 110b before the second connection point 111b. The secondary heat exchanger 108 is provided to heat the gaseous hydrogen coming from the tank heater 106 to the interface requirement temperature before injecting into the main flow i.e. in the supply pipe 102. The gaseous hydrogen from the tank heater 106 has been cooled down by energy transfer to hydrogen within the tank 50. However, this is optional, as the primary heat exchanger 104 may sufficiently heat the hydrogen to match the temperature interface requirement after the mixing of fluids.

In the variant of Fig. 2, the hydrogen distribution system 100 comprises a line temperature sensor 152 arranged on the supply line 102 downstream the second connection point 111b and the control unit 20 arranged to receive data from the line temperature sensor 152 and to control the primary heat exchanger 104 and/or the secondary heat exchanger 108 when it's present, according to these data.

As previously described the control unit 20 has a memory in which are stocked a first target temperature and a second target temperature and it comprises means for comparing these target temperatures to the temperature measured and transmitted by the temperature sensor 152.

According to a particular embodiment, the first target temperature is equal to 200K and the second target temperature is equal to 400K. In a general manner, the first target temperature is below the second target temperature, but they can be equal.

When the control unit 20 detects that the measured temperature is under the first target temperature, the control unit 20 commands the primary heat exchanger 104 and/or in the secondary heat exchanger 108 in order to have an increasing of the heat transfer in the primary heat exchanger 104 and/or in the secondary heat exchanger 108 and when the control unit 20 detects that the measured temperature is above the second target temperature, the control unit 20 commands the primary heat exchanger 104 and/or in the secondary heat exchanger 108 in order to have a decreasing of the heat transfer in the primary heat exchanger 104 and/or in the secondary heat exchanger 108.

According to another particular embodiment, the regulation is done through a PID with control loop feedback with a target temperature comprises between 200K and 400K, for example 300K.

The primary 104 and/or secondary 108 heat exchangers could be electrical heaters or heat exchangers connected to a heat-transfer fluid loop which could be linked to the same heat source.

For monitoring an amount of usable hydrogen, the tank pressure sensor 150 measures the pressure of the hydrogen in the tank 50 and a tank temperature sensor 151 measures the temperature of the hydrogen in the tank 50. From these data, the control unit 20 calculates the hydrogen density in the tank 50 and, with that, determines the remaining extractable hydrogen in the tank 50.

At the beginning, the tank 50 is full and will be at low temperature (e.g. 20K). During extraction, the temperature of the tank 50 will rise (associated with a lower density). At the end of the mission, the tank 50 is empty and will be at high temperature (e.g. 50K).

According to an example, when the hydrogen consumer 52 is a combustion engine 54, the pressure of the hydrogen in the tank 50 is 35 bars and the temperature of the hydrogen in the tank 50 is between 20K and 50K. After the primary heat exchanger 104, the pressure is 35 bars and the temperature is 300K. The variable three-way valve 113 is controlled to have 3% of the mass flow go through the first sub-pipe 110a and 97% of the mass flow go directly to the combustion engine 54. At the output of the tank heater 106, the pressure is 35 bars and the temperature is between 20K and 300K. At the output of the secondary heat exchanger 108, the pressure is 35 bars and the temperature is 300K. At the entry of the combustion engine 54, the pressure is 35 bars and the temperature is 300K.

According to an example, when the hydrogen consumer 52 is a fuel cell 56, the pressure of the hydrogen in the tank 50 is 20 bars and the temperature of the hydrogen in the tank 50 is between 20K and 50K. After the primary heat exchanger 104, the pressure is 20 bars and the temperature is 300K. The variable three-way valve 113 is controlled to have 3% of the mass flow go through the first sub-pipe 110a and 97% of the mass flow go directly to the fuel cell 56. At the output of the tank heater 106, the pressure is 20 bars and the temperature is between 20K and 300K. At the output of the secondary heat exchanger 108, the pressure is 20 bars and the temperature is 300K. At the entry of the fuel cell 56, the pressure is 20 bars and the temperature is 300K.

In the second embodiment, the tank heater 206 is a heat exchanger in which the calories of the hydrogen circulating in said tank heater 206 are transferred to the hydrogen stored in the tank 50 to heat it.

The supply pipe 202 crosses firstly the tank heater 206 and secondly the primary heat exchanger 204, i.e. that all the hydrogen flowing out of the tank 50 goes through the tank heater 206 and the primary heat exchanger 204 before entering the hydrogen consumer 52.

As an option, the hydrogen distribution system 200 comprises a pre-warming heat exchanger 208 arranged on the supply pipe 202 and configured to heat the hydrogen flowing in said supply pipe 202 and said pre-warming heat exchanger 208 is arranged upstream the tank heater 206. The pre-warming heat exchanger 208 heats the hydrogen to match tank energy need in order that the pressure of the tank 50 is maintained and the entire flow of hydrogen is passed to the tank heater 206. The tank heater 106 again transmits energy to the hydrogen in the tank 50 to maintain the tank pressure. The primary heat exchanger 204 heats the hydrogen to the interface requirement temperature.

In the variant of Fig. 4, the hydrogen distribution system 200 comprises a tank pressure sensor 250 arranged to measure the pressure of the hydrogen in the tank 50 and the control unit 20 arranged to receive data from the tank pressure sensor 250 and to control the pre-warming heat exchanger 208 according to these data.

As previously described, the control unit 20 has a memory in which are stocked a first target tank pressure and a second target tank pressure and it comprises means for comparing these target tank pressures to the pressure measured and transmitted by the tank pressure sensor 250.

According to a particular embodiment, the first target tank pressure is egal to 35 bar and the second target tank pressure is egal to 50 bar. In a general manner, the first target tank pressure is below the second target tank pressure, but they can be egal. When the control unit 20 detects that the measured pressure is under the first target tank pressure, the control unit 20 commands the pre-warming heat exchanger 208 in order to have an increasing of the heat transfer in the pre-warming heat exchanger 208, and when the control unit 20 detects that the measured pressure is above the second target tank pressure, the control unit 20 commands the pre-warming heat exchanger 208 in order to have a decreasing of the heat transfer in the pre-warming heat exchanger 208.

According to another particular embodiment, the regulation is done through a PID with control loop feedback with a target pressure comprises between 35 bar and 50 bar.

In the variant of Fig. 4, the hydrogen distribution system 200 comprises a line temperature sensor 252 arranged on the supply line 202 downstream the primary heat exchanger 204 and the control unit 20 arranged to receive data from the line temperature sensor 252 and to control the primary heat exchanger 204 according to these data.

As previously described, the control unit 20 has a memory in which are stocked a first target temperature and a second target temperature and it comprises means for comparing these target temperatures to the temperature measured and transmitted by the temperature sensor 252.

According to a particular embodiment, the first target temperature is egal to 200K and the second target temperature is egal to 400K. In a general manner, the first target temperature is below the second target temperature, but they can be egal.

When the control unit 20 detects that the measured temperature is under the first target temperature, the control unit 20 commands the primary heat exchanger 204 in order to have an increasing of the heat transfer in the primary heat exchanger 204 and when the control unit 20 detects that the measured temperature is above the second target temperature, the control unit 20 commands the primary heat exchanger 204 in order to have a decreasing of the heat transfer in the primary heat exchanger 204. According to another particular embodiment, the regulation is done through a PID with control loop feedback with a target temperature comprises between 200K and 400K, for example 300K.

The primary 204 and/or the pre-warming 208 heat exchangers could be electrical heaters or heat exchangers connected to a heat-transfer fluid loop which could be linked to the same heat source.

For monitoring an amount of usable hydrogen, the pressure sensor 250 measures the pressure of the hydrogen in the tank 50 and a tank temperature sensor 251 measures the temperature of the hydrogen in the tank 50. From these data, the control unit 50 calculates the hydrogen density in the tank 50 and, from that, determines the remaining extractable hydrogen in the tank 50.

Again, at the beginning, the tank 50 is full and will be at low temperature (e.g. 20K). During extraction, the temperature of the tank 50 will rise (associated with a lower density). At the end of the mission, the tank 50 is empty and will be at high temperature (e.g. 50K).

According to an example, when the hydrogen consumer 52 is a combustion engine 54, the pressure of the hydrogen in the tank 50 is 35 bars and the temperature of the hydrogen in the tank 50 is between 20K and 50K. After the pre-warming heat exchanger 208, the pressure is 35 bars and the temperature is between 21K and 51K. At the output of the tank heater 206, the pressure is 35 bars and the temperature is between 20K and 51K. At the output of the primary heat exchanger 204, the pressure is 35 bars and the temperature is 300K. At the entry of the combustion engine 54, the pressure is 35 bars and the temperature is 300K.

According to an example, when the hydrogen consumer 52 is a fuel cell 56, the pressure of the hydrogen in the tank 50 is 20 bars and the temperature of the hydrogen in the tank 50 is between 20K and 50K. After the pre-warming heat exchanger 208, the pressure is 20 bars and the temperature is between 21K and 51K. At the output of the tank heater 206, the pressure is 20 bars and the temperature is between 20K and 51K. At the output of the primary heat exchanger 204, the pressure is 20 bars and the temperature is 300K. At the entry of the fuel cell 56, the pressure is 20 bars and the temperature is 300K.

In the third embodiment, the tank heater 306 is an electrical tank heater which transmits energy to the hydrogen in the tank 50 to maintain the tank pressure.

The primary heat exchanger 304 heats the hydrogen to the interface requirement temperature.

The hydrogen distribution system 300 comprises a tank pressure sensor 350 arranged to measure the pressure of the hydrogen in the tank 50 and the control unit 20 arranged to receive data from the tank pressure sensor 350 and to control the tank heater 306 according to these data.

As previously described, the control unit 20 has a memory in which are stocked a first target tank pressure and a second target tank pressure and it comprises means for comparing these target tank pressures to the pressure measured and transmitted by the tank pressure sensor 350.

According to a particular embodiment, the first target tank pressure is egal to 35 bar and the second target tank pressure is egal to 50 bar. In a general manner, the first target tank pressure is below the second target tank pressure, but they can be egal. When the control unit 20 detects that the measured pressure is under the first target tank pressure, the control unit 20 commands the tank heater 306 in order to have an increasing of the heat transfer in the tank heater 306, and when the control unit 20 detects that the measured pressure is above the second target tank pressure, the control unit 20 commands the tank heater 306 in order to have a decreasing of the heat transfer in the tank heater 306.

According to another particular embodiment, the regulation is done through a PID with control loop feedback with a target pressure comprises between 35 bar and 50 bar.

In the variant of Fig. 6, the hydrogen distribution system 300 comprises a line temperature sensor 352 arranged on the supply line 302 downstream the primary heat exchanger 304 and the control unit 20 arranged to receive data from the line temperature sensor 352 and to control the primary heat exchanger 304 according to these data.

As previously described the control unit 20 has a memory in which are stocked a first target temperature and a second target temperature and it comprises means for comparing these target temperatures to the temperature measured and transmitted by the temperature sensor 352.

According to a particular embodiment, the first target temperature is egal to 200K and the second target temperature is egal to 400K. In a general manner, the first target temperature is below the second target temperature, but they can be egal.

When the control unit 20 detects that the measured temperature is under the first target temperature, the control unit 20 commands the primary heat exchanger 304 in order to have an increasing of the heat transfer in the primary heat exchanger 304 and when the control unit 20 detects that the measured temperature is above the second target temperature, the control unit 20 commands the primary heat exchanger 304 in order to have a decreasing of the heat transfer in the primary heat exchanger 304. According to another particular embodiment, the regulation is done through a PID with control loop feedback with a target temperature comprises between 200K and 400K, for example 300K.

The primary heat exchanger 304 could be an electrical heater or a heat exchanger connected to a heat-transfer fluid loop.

For monitoring an amount of usable hydrogen, the pressure sensor 350 measures the pressure of the hydrogen in the tank 50 and a tank temperature sensor 351 measures the temperature of the hydrogen in the tank 50. From these data, the control unit 50 calculates the hydrogen density in the tank 50 and, from that, determines the remaining extractable hydrogen in the tank 50.

Again, at the beginning, the tank 50 is full and will be at low temperature (e.g. 20K). During extraction, the temperature of the tank 50 will rise (associated with a lower density). At the end of the mission, the tank 50 is empty and will be at high temperature (e.g. 50K).

According to an example, when the hydrogen consumer 52 is a combustion engine 54, the pressure of the hydrogen in the tank 50 is 35 bars and the temperature of the hydrogen in the tank 50 is between 20K and 50K. After the primary heat exchanger 304, the pressure is 35 bars and the temperature is 300K. At the entry of the combustion engine 54, the pressure is 35 bars and the temperature is 300K.

According to an example, when the hydrogen consumer 52 is a fuel cell 56, the pressure of the hydrogen in the tank 50 is 20 bars and the temperature of the hydrogen in the tank 50 is between 20K and 50K. After the primary heat exchanger 304, the pressure is 20 bars and the temperature is 300K. At the entry of the fuel cell 56, the pressure is 20 bars and the temperature is 300K.

In a general manner, the aircraft 10 comprises a fuselage 10a, on each side of which is fixed a wing 10b under which is fixed a propulsion system 10c containing the hydrogen consumer 52.

In the Figs. 2 to 6, as an example, the tank 50 is in the fuselage 10a and the supply pipe 102, 202, 302 crosses the fuselage 10a, the wing 10b and the propulsion system 10c. The primary heat exchanger 104, 204, 304 may be located in the propulsion system 10c, in the wing 10b, or in the fuselage 10a. The pump 62 may be located in the propulsion system 10c, in the wing 10b, or in the fuselage 10a. The secondary heat exchanger 108 and the pre-warming heat exchanger 208 may be located in the propulsion system 10c, in the wing 10b, or in the fuselage 10a.

When a heater is an electric heater, it receives electric current to warm through appropriate electrical connection. An increasing of the heat transfer by this heater corresponds to an increasing of the temperature of the heater and a decreasing of the heat transfer by this heater corresponds to a decreasing of the temperature of the heater.

When a heater is a heat exchanger working with a heat-transfer fluid loop, the pipe of the loop crosses the heater. An increasing of the heat transfer by this heater corresponds to an increasing of the temperature and of the mass flow of the heat-transfer fluid in the heater exchanger and a decreasing of the heat transfer by this heater corresponds to a decreasing of the temperature and of the mass flow of the heat-transfer fluid in the heater exchanger

The control unit described herein may include a controller or a computing device comprising a processing and a memory which has stored therein computer-executable instructions for implementing the processes described herein. The control unit may comprise any suitable devices configured to cause a series of steps to be performed so as to implement the method such that instructions, when executed by the computing device or other programmable apparatus, may cause the functions/acts/steps specified in the methods described herein to be executed. The control unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory may be any suitable known or other machine-readable storage medium. The memory may comprise non-transitory computer readable storage medium such as, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to the device such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. The memory may comprise any storage means (e.g., devices) suitable for retrievably storing the computer-executable instructions executable by control unit. The methods and systems described herein may be implemented in a high-level procedural or object-oriented programming or scripting language, or a combination thereof, to communicate with or assist in the operation of the controller or computing device. Alternatively, the methods and systems described herein may be implemented in assembly or machine language. The language may be a compiled or interpreted language. Program code for implementing the methods and systems described herein may be stored on the storage media or the device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein.

Computer-executable instructions may be in many forms, including modules, executed by one or more computers or other devices. Generally, modules include routines, programs, objects, components, data structures, etc., that perform particular tasks or implement particular abstract data types. Typically, the functionality of the modules may be combined or distributed as desired in various embodiments.

It will be appreciated that the systems and devices and components thereof may utilize communication through any of various network protocols such as TCP/IP, Ethernet, FTP, HTTP and the like, and/or through various wireless communication technologies such as GSM, CDMA, Wi-Fi, and WiMAX, is and the various computing devices described herein may be configured to communicate using any of these network protocols or technologies..

## Claims

1. Hydrogen distribution system (100, 200, 300) for supplying hydrogen to a hydrogen consumer (52) on an aircraft (10), the hydrogen distribution system (100, 200, 300) comprising:
- a tank (50) storing hydrogen at a supercritical pressure;
- a supply pipe (102, 202, 302) fluidly connected between the tank (50) and the hydrogen consumer (52);
- a primary heat exchanger (104, 204, 304) arranged on the supply pipe (102, 202, 302) and configured to heat the hydrogen flowing in said supply pipe (102, 202, 302) from the tank (50) to the hydrogen consumer (52); and
- a tank heater (106, 206, 306) arranged in the tank (50) and configured to heat the hydrogen in the tank (50).

2. Hydrogen distribution system (100, 200, 300) according to claim **1,** wherein it comprises a pump (62) arranged on the supply pipe (102, 202, 302).

3. Hydrogen distribution system (100, 200, 300) according to claim 2, wherein it comprises a line pressure sensor (60) arranged to measure the pressure of the hydrogen in the supply pipe (102, 202, 302) and located downstream of the pump (62), and a control unit (20) arranged to receive data from the line pressure sensor (60) and to control the speed of the pump (62) according to these data.

4. Hydrogen distribution system (300) according to any one of claims 1 to 3, wherein the tank heater (306) is an electrical heater, and wherein the hydrogen distribution system (300) comprises a tank pressure sensor (350) arranged to measure the pressure of the hydrogen in the tank (50) and a control unit (20) arranged to receive data from the tank pressure sensor (350) and to control the tank heater (306) according to these data.

5. Hydrogen distribution system (300) according to claim 4, wherein it comprises a line temperature sensor (352) arranged downstream the primary heat exchanger (304), and a control unit (20) arranged to receive data from the line temperature sensor (352) and to control the primary heat exchanger (304) according to these data.

6. Hydrogen distribution system (200) according to any one of the claims 1 to 3, wherein the tank heater (206) is a heat exchanger, and wherein the supply pipe (202) crosses firstly the tank heater (206) and secondly the primary heat exchanger (204).

7. Hydrogen distribution system (200) according to claim 6, wherein it comprises a pre-warming heat exchanger (208) arranged on the supply pipe (202) and configured to heat the hydrogen flowing in said supply pipe (202), and wherein said pre-warming heat exchanger (208) is arranged upstream the tank heater (206).

8. Hydrogen distribution system (200) according to claim 7, wherein it comprises a tank pressure sensor (250) arranged to measure the pressure of the hydrogen in the tank (50) and a control unit (20) arranged to receive data from the tank pressure sensor (250) and to control the pre-warming heat exchanger (208) according to these data.

9. Hydrogen distribution system (200) according to any one of claims 6 to 8, wherein it comprises a line temperature sensor (252) arranged downstream the primary heat exchanger (204), and a control unit (20) arranged to receive data from the line temperature sensor (252) and to control the primary heat exchanger (204) according to these data.

10. Hydrogen distribution system (100) according to any one of the claims 1 to 3, wherein the tank heater (206) is a heat exchanger, and wherein the hydrogen distribution system (100) comprises a first sub-pipe (110a) fluidly connected by one end to a first connection point (111a) of the supply pipe (102) downstream the primary heat exchanger (104) and by another end to the tank heater (106), and a second sub-pipe (110b) fluidly connected by one end to the tank heater (106) and by another end to a second connection point (111b) of the supply pipe (102) downstream the first connection point (111a).

11. Hydrogen distribution system (100) according to claim 10, wherein it comprises a variable three-way valve (113) arranged at the first connection point (111a), a tank pressure sensor (150) arranged to measure the pressure of the hydrogen in the tank (50) and a control unit (20) arranged to receive data from the tank pressure sensor (250) and to control the variable three-way valve (113) according to these data.

12. Hydrogen distribution system (100) according to any one of claim 10 or 11, wherein it comprises a secondary heat exchanger (108) arranged on the second sub-pipe (110b) and configured to heat the hydrogen flowing in said second sub-pipe (110b).

13. Hydrogen distribution system (100) according to any one of claims 10 to 12, wherein it comprises a line temperature sensor (152) arranged downstream the second connection point (111b), and a control unit (20) arranged to receive data from the line temperature sensor (152) and to control the primary heat exchanger (104) and/or the secondary heat exchanger (108) when it's present, according to these data.

14. Aircraft (10) comprising a hydrogen consumer (52) and a hydrogen distribution system (100, 200, 300) according to any one of the preceding claims wherein the supply pipe (102, 202, 302) is fluidly connected to the hydrogen consumer (52).

15. Aircraft (10) according to claim 14, wherein, the hydrogen consumer (52) is combustion engine (54) with a combustion chamber (54a) fueled with hydrogen.
